Europäisches Patentamt

European Patent Office

Office européen des brevets

(19)

(11) **EP 0 586 302 B1**

(12) **FASCICULE DE BREVET EUROPEEN**

| | |
|---|---|
| (45) Date de publication et mention de la délivrance du brevet:<br>**20.11.1996 Bulletin 1996/47** | (51) Int Cl.6: **G01C 21/16**, G01S 13/86, G01C 21/00 |

(21) Numéro de dépôt: **93402133.8**

(22) Date de dépôt: **01.09.1993**

(54) **Système embarqué de navigation pour un engin aérien comportant un radar à visée latérale et à synthèse d'ouverture**

Bordnavigationssystem für ein Flugzeug mit einem Seitensichtradar mit synthetischer Apertur

On-board navigation system for aircraft comprising a side-looking synthetic aperture radar

(84) Etats contractants désignés:
**DE GB NL**

(30) Priorité: **03.09.1992 FR 9210531**

(43) Date de publication de la demande:
**09.03.1994 Bulletin 1994/10**

(73) Titulaire: **AEROSPATIALE Société Nationale Industrielle**
**75781 Paris Cédex 16 (FR)**

(72) Inventeur: **Falconnet, Bruno**
**F-78480 Verneuil sur Seine (FR)**

(74) Mandataire: **Bonnetat, Christian**
**CABINET BONNETAT**
**23, Rue de St. Pétersbourg**
**75008 Paris (FR)**

(56) Documents cités:
- **IEEE Plans 90 Postion Location and Navigation Symposium, Las Vegas, EUA, 20-23 Mars 1990, J.E.BEVINGTON et al.: "Precision Aided Inertial Navigation Using SAR and Digital Map Data", pages 490-496**
- **IEEE TRANSACTIONS ON AEROSPACE AND ELECTRONIC SYSTEMS vol. AES14, no. 3 , Mai 1978 , NEW YORK US, pages 487 - 500, H.MOSTAFAVI ET AL. 'Image Correlation With Geometric Distortion'**

## Description

La présente invention concerne un système embarqué de navigation pour un aéronef, tel qu'un avion, un missile ou un engin.

La navigation des aéronefs, des missiles ou des engins spatiaux est généralement assurée par l'emploi d'une ou de plusieurs centrales inertielles de navigation, éventuellement hybridée(s) avec une mesure altimétrique. Les erreurs de calibration et de mise en oeuvre attachées à ces équipements inertiels engendrent inéluctablement une dégradation permanente de la précision de navigation au cours du vol de ces engins.

Lorsque cette erreur de navigation devient trop importante, il s'avère nécessaire d'effectuer un recalage des informations inertielles par un moyen complémentaire.

De nombreux senseurs de recalage peuvent être envisagés, tels que par exemple un système de localisation par satellites GPS (Global positioning System), un recalage par corrélation altimétrique TERCOM, une visée stellaire, une imagerie visible ou non, ..., chacun étant caractérisé par des conditions d'emploi et des limites d'utilisation associées. Avec l'avènement des radars à haute résolution embarquables, le recalage précis de la navigation par imagerie radar devient envisageable.

C'est notamment le cas lorsque l'engin est équipé d'un radar 5 à visée latérale et à synthèse d'ouverture, appelé radar SAR, qui est un système autonome, utilisable par tout temps et à toute heure et qui permet d'envisager un recalage de la navigation très précis et très complet.

Il a déjà été proposé à cet effet un système embarqué de navigation pour un engin aérien du type comportant une centrale inertielle de navigation délivrant une estimation de la position et de la vitesse du véhicule par rapport à la surface terrestre, un radar à visée latérale et à synthèse d'ouverture SAR produisant une image radar SAR du territoire au voisinage du point survolé par le véhicule, des moyens de mémoire contenant une carte de référence du territoire survolé, des moyens de comparaison par mise en coïncidence d'une image radar SAR produite en vol avec la carte de référence mémorisée et fournissant un écart de mise en coïncidence selon deux directions perpendiculaires et des moyens de calcul, reliés aux moyens de mémoire, à la centrale inertielle de navigation et aux moyens de comparaison, qui comportent des moyens à filtre du type KALMAN, et qui délivrent une innovation au filtre de KALMAN pour l'estimation des erreurs inertielles de position et de vitesse en fonction de l'écart de mise en coïncidence $\delta$.

Un tel système est décrit et représenté dans le document James E. Bevington - Charles A. Martilla (Honeywell Systems and Research Center) - Precision Aided Inertial Navigation Using SAR and Digital Map Data IEEE PLAN' 1990 : "Position Location and Navigation Symposium Record", mars 1990, pages 490-496.

Ces travaux se fondent sur une modélisation dans laquelle l'écart de mise en coïncidence $\delta$ est directement confondu avec l'erreur inertielle dans le plan horizontal contenant les deux directions perpendiculaires ou nécessitent l'emploi d'une référence d'altitude (altimètre).

Cette modélisation ne permet pas de remonter directement aux erreurs inertielles d'altitude et/ou de vitesse et, dans le cas où ces erreurs inertielles de vitesse ou d'altitude sont trop importantes, le recalage de la position horizontale est entaché d'erreurs importantes.

L'invention a pour objet un système de navigation du type mentionné précédemment qui permette, d'une part, d'estimer et de recaler l'altitude et la vitesse du véhicule ou de l'engin et, d'autre part, de tenir compte de ces estimations d'altitude et de vitesse pour estimer et recaler avec une grande précision la position horizontale du véhicule, et ceci en l'absence de tout système de mesure d'altitude, tel qu'un radio-altimètre, ou de mesure de la vitesse, tel qu'un anémomètre laser, autre que la centrale inertielle de navigation.

A cet effet, selon l'invention, le système de navigation est caractérisé en ce que lesdits moyens de calcul sont adaptés à calculer l'écart de mise en coïncidence, en fonction du vecteur des erreurs d'estimation $\Delta U$ associé au vecteur d'état U constitué par les composantes des vecteurs P,V de la position et de la vitesse relative du véhicule, sous la forme d'une observation bruitée

$$\delta = \begin{vmatrix} \delta X \\ \delta Y \end{vmatrix} = \begin{vmatrix} \Delta X + f(\Delta Z, \Delta V) + \eta_x \\ \Delta Y + g(\Delta Z, \Delta V) + \eta_y \end{vmatrix}$$

dans laquelle:

- $\eta$ est le vecteur d'erreur de mise en coïncidence selon lesdites deux directions perpendiculaires $\eta_x$, $\eta_y$ ;
- $\Delta X$ et $\Delta Y$ représentent l'erreur inertielle de position du véhicule selon lesdites deux directions perpendiculaires horizontales ;

- $\Delta Z$ représente l'erreur inertielle d'altitude du véhicule
- $\Delta V$ représente le vecteur des erreurs inertielles de vitesse du véhicule ; et
- $f(\Delta Z, \Delta V)$ et $g(\Delta Z, \Delta V)$ sont deux fonctions scalaires ;

et en ce que le filtre est un filtre de KALMAN-BUCY de matrice de gains K, telle que l'estimée $\Delta \hat{U}$ du vecteur des erreurs d'estimation soit égale à

$$\Delta \hat{U} \ = \ K.\delta$$

L'invention concerne également une méthode linéaire de recalage se fondant sur les termes linéaires et une méthode étendue permettant de prendre en compte les non-linéarités dues aux erreurs d'altitude inertielles.

Les figures du dessin annexé feront bien comprendre comment l'invention peut être réalisée. Sur ces figures, des références identiques désignent des éléments semblables.

La figure 1 est un schéma synoptique illustrant les principaux composants d'un système de navigation selon l'invention.

La figure 2 est un schéma permettant de définir les paramètres nécessaires aux explications qui vont suivre, relatives à la méthode de recalage mise en oeuvre dans le système de navigation selon l'invention.

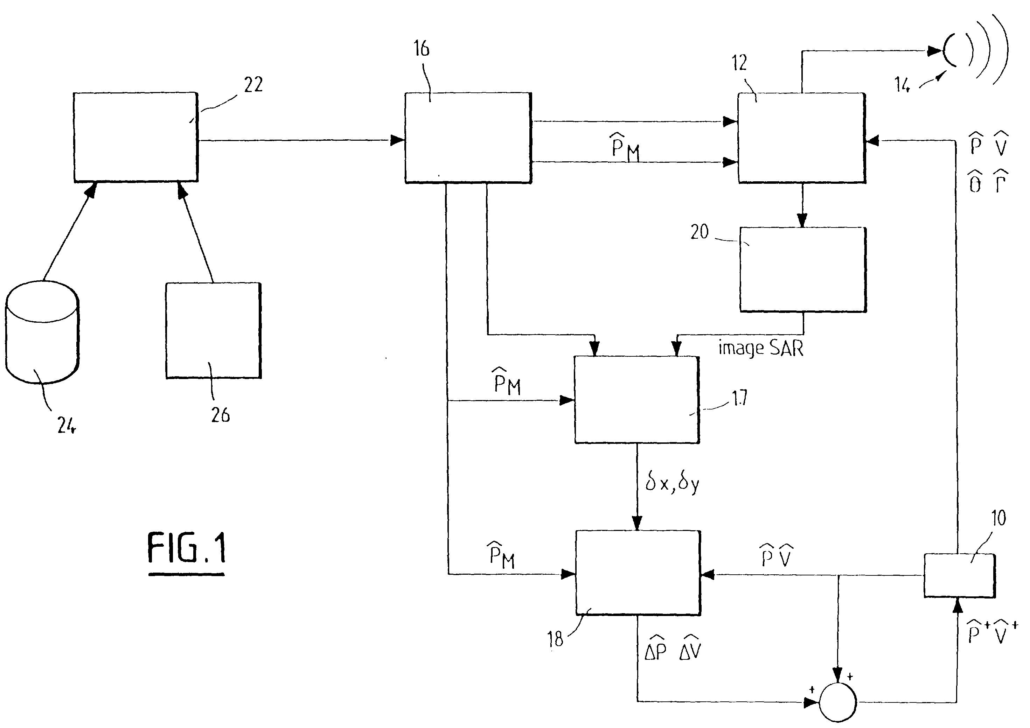

Les éléments 10 à 20 du système illustré à la figure 1 sont destinés à être montés à bord d'un mobile aérien, tel qu'un aéronef ou un missile.

Cette partie embarquable dudit système comporte une centrale inertielle de navigation 10, un radar à synthèse d'ouverture 12 équipé de son processeur SAR et relié à une antenne SAR 14, des mémoires de bord 16, un corrélateur d'images 17 et des moyens de calcul 18 à filtre de KALMAN-BUCY pour le recalage de navigation.

Le corrélateur d'images 17 reçoit des images du processeur SAR 12, après leur traitement dans une unité 20 de prétraitement d'images, et de la mémoire 16 dans laquelle sont stockées des images d'une carte de référence du territoire que l'engin va survoler, qui y ont été stockées, ainsi que d'autres données telles qu'un scénario de recalage, préalablement au vol, à partir d'une unité au sol de préparation de mission 22, qui est reliée à une base de données cartographiques 24 et à des moyens 26 d'entrée des paramètres de mission.

On décrira maintenant plus en détail le système de navigation et la méthode de recalage mise en oeuvre.

Préparation de la mission de vol

La préparation consiste, en s'appuyant sur les paramètres de la mission assignée à l'engin tels que la trajectoire, les cibles, les zones survolées, à préparer une ou plusieurs cartes numériques, dites de référence, qui seront chargées avant le début du vol dans les mémoires 16 à bord de l'engin.

Ces cartes de référence représentent une certaine modélisation (niveaux radar, limites de détails, zones de contrastes, ...) du terrain que le radar SAR sera amené à imager au cours du vol.

Les cartes de référence peuvent être entachées de deux types d'erreurs :

- des erreurs de localisation de la carte dans un trièdre de référence ; ces erreurs sont soit absolues (recalage de la navigation en un point de croisière), soit relatives (recalage de la navigation au voisinage d'un point à atteindre : cible, terrain d'atterrissage, amer, ...). Ces erreurs sont, dans la pratique, réparties approximativement comme des variables aléatoires gaussiennes, centrées et isotropes dans le plan horizontal. Elles sont donc caractérisées par :

  - $\sigma_h$ : l'écart type des erreurs de localisation horizontales,
  - $\sigma_z$ : l'écart type des erreurs de localisation verticales,

- des erreurs radiométriques ; ces erreurs, très délicates à modéliser, reflètent les méconnaissances de la nature exacte du terrain qui va être imagé (variations saisonnières, modification naturelle ou humaine du paysage, ...).

La préparation de mission peut également inclure la définition d'un scénario de recalage fixant, avant le vol, les dates (ou altitudes) auxquelles seront effectués les divers recalages, ainsi que les conditions géométriques des diverses visées radar à réaliser.

Navigation inertielle

La navigation de l'engin est assurée de manière nominale par la centrale inertielle de guidage 10. Cette centrale, qui peut être de technologie existante (à plate-forme stabilisée ou à composants liés), fournit à la demande des systèmes de bord une estimation des vecteurs de la position, $\hat{P}$, de la vitesse relative à la surface terrestre $\hat{V}$, de l'attitude à et de l'accélération courante $\hat{\Gamma}$ de l'engin. Ces estimations sont, de manière standard, fournies par l'intégration des informations disponibles en sortie des accéléromètres et des gyromètres. La centrale est capable d'accepter en cours de vol un recalage de son point courant de navigation, et en particulier de la position et de la vitesse estimées de l'engin.

Chacune de ces estimations diffère de la réalité par un écart dénommé "erreur inertielle" :

$$\begin{cases} P & = & \hat{P} & + & \Delta P \\ V & = & \hat{V} & + & \Delta V \\ \Theta & = & \hat{\Theta} & + & \Delta \Theta \\ \Gamma & = & \hat{\Gamma} & + & \Delta \Gamma \end{cases} \qquad (1)$$

Si le calculateur de navigation est non biaisé, ces erreurs inertielles sont statistiquement centrées (de moyenne nulle). On les suppose gaussiennes et elles sont donc caractérisées, à chaque instant du vol, par une matrice de covariance. On suppose également que le calculateur de navigation connaît, à chaque instant $t_i$ du vol, les matrices de covariance associées aux erreurs de position et de vitesse relative de l'engin, par exemple par une méthode de propagation des matrices de covariance initiales :

$$\Sigma_P(t_i) = E[\Delta P . \Delta P^t] (t_i)$$

$$\Sigma_v(t_i) = E[\Delta V . \Delta V^t] (t_i) \qquad (2)$$

$$\Sigma_{Pv}(t_i) = E[\Delta P . \Delta V^t] (t_i)$$

On notera

$$U = \begin{vmatrix} P \\ V \end{vmatrix}$$

le vecteur d'état constitué des composantes de la position et de la vitesse relative de l'engin comportant six variables d'état. Le vecteur des erreurs d'estimation associé est

$$\Delta U = \begin{vmatrix} \Delta P \\ \Delta V \end{vmatrix}$$

et est donc caractérisé par sa matrice de covariance à l'instant $t_i$ :

$$\Sigma_U(t_i) = \begin{bmatrix} \Sigma_P(t_i) & \Sigma_{Pv}(t_i) \\[1em] \Sigma_{Pv}^t(t_i) & \Sigma_v(t_i) \end{bmatrix} \qquad (3)$$

Imagerie radar SAR

On désigne par la suite sous le terme capteur radar SAR l'ensemble des équipements et traitements conduisant à la production d'une image radar SAR (chaîne d'émission/réception, traitement SAR, prétraitement des images, ...).

Le capteur radar SAR réalise, à des instants et sous des conditions géométriques fixés par le scénario de recalage, une image radar SAR du terrain au voisinage du point survolé.

Le module de traitement SAR 12, dénommé processeur SAR, s'appuie sur les informations de position et de vitesse de l'engin fournies par la centrale 10. Certains modes de fonctionnement (compensation d'erreurs, trajectoire parcourue à vitesse non constante) peuvent également nécessiter l'utilisation des informations d'attitude et d'accélération de l'engin, également fournies par la centrale 10.

La définition d'un processeur SAR est aujourd'hui un problème classique largement exploré et des exemples peuvent en être trouvés dans les documents :

- R.O. HARGER - Synthetic Aperture Radar Systems - New-York, Academic Press, 1970.
- A.W. RIHACZEK - Principles of High Resolution Radar - New-York, Mac Graw Hill, 1969.

La sortie du capteur est une image radar à haute résolution du terrain. Cette image est, de même que pour la carte de référence, entachée d'erreurs :

- du fait des erreurs inertielles de position et de vitesse, le centre de l'image réalisée ne correspond pas exactement au centre de l'image que l'on souhaite réaliser. Une partie de ces erreurs inertielles (altitude et vitesse) entraînent également une faible déformation de la géométrie de l'image réalisé ;
- le traitement cohérent du signal radar fait nécessairement apparaître un bruit très caractéristique des images SAR appelé Speckle. Ce bruit se traduit sous la forme d'un mouchetage de l'image SAR.

Cette image subit ensuite quelques prétraitements (filtrage du Speckle, extraction de contours, seuillage, ...) dans les moyens 20 avant d'être utilisée dans le processus de mise en coïncidence.

Mise en coïncidence par le corrélateur d'images

Le corrélateur d'images 16 effectue la mise en coïncidence, également appelée Map-Matching, de l'image SAR engendrée en vol avec la carte de référence embarquée. De très nombreuses techniques de mise en coïncidence sont connues.

A l'issue du processus de mise en coïncidence, le corrélateur délivre un écart bi-dimensionnel

$$\delta = \begin{vmatrix} \delta_x \\[0.6em] \delta_y \end{vmatrix}$$

représentant, à une erreur de mise en coïncidence

$$\eta = \begin{vmatrix} \eta_x \\[0.6em] \eta_y \end{vmatrix}$$

près, le déplacement du centre de l'image SAR réalisée par rapport au centre de l'image SAR que l'on souhaitait réaliser.

Cet écart δ est généralement évalué dans deux directions perpendiculaires choisies de manière arbitraire. L'erreur η représente la précision du processus de mise en coïncidence.

L'évaluation théorique des performances de ce processus fait l'objet par exemple du document H. MOSTAFAVI - F. SMITH (Systems Control) - Image Correlation with Geometric Distorsion - Part I : Acquisition Performance - Part II : Effect on Local Accuracy - IEEE Transactions, vol. AES-14, pages 487-500, mai 1978.

L'erreur de mise en coïncidence peut être caractérisée comme une erreur gaussienne centrée, dont la matrice de covariance $\Sigma\eta$, de taille 2x2, est obtenue analytiquement en fonction :

- - des paramètres dimensionnant du capteur SAR (résolution, taille d'image, rapport signal à bruit, ...) ;
- de la cinématique de la trajectoire (direction de visée, altitude, vitesse, pente, ...) ;
- des erreurs présentes dans le système (erreurs inertielles, erreurs de traitement numérique, erreurs cartographiques, bruits, ...) ;
- de la nature statistique du terrain imagé (longueur de corrélation).

On donnera ci-après une expression relativement simplifiée, mais cependant suffisamment réaliste, de la matrice de covariance $\Sigma\eta$.

Recalage de la navigation

L'invention concerne le recalage proprement dit de la navigation. La mise en oeuvre de ce recalage se décompose en trois étapes :

- modélisation de la géométrie de prise d'image SAR ;
- modélisation de l'écart de mise en coïncidence δ ;
- définition du filtrage des mesures à et recalage du point courant de la navigation.

Définition du référentiel de calcul

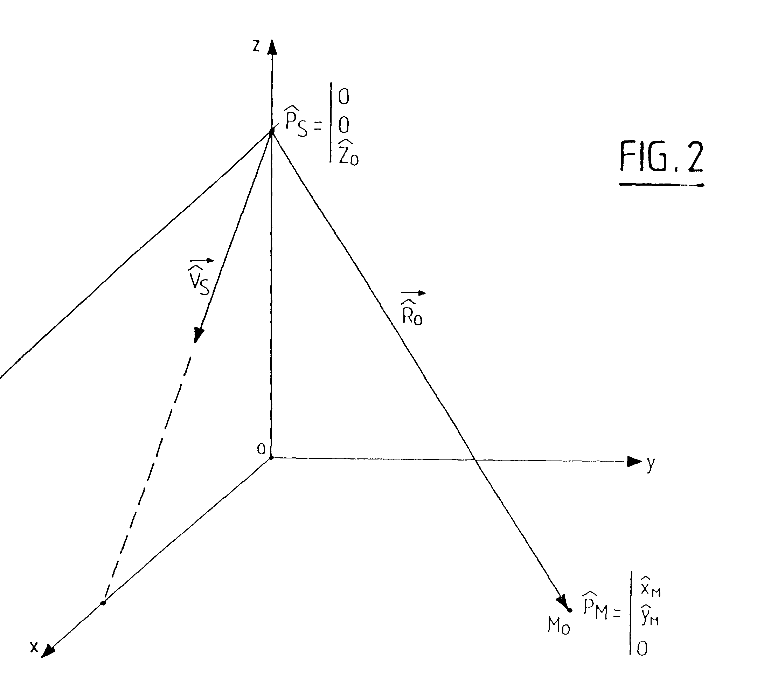

Soit T = (O,X,Y,Z) le référentiel orthonormé défini, au point courant estimé de la navigation de l'engin, illustré sur la figure 2, par :

- O : origine, le point du sol situé à la verticale estimée du centre de phase de l'antenne SAR ;
- Z : la verticale ascendante passant par la position estimée du centre de phase de l'antenne SAR ;
- X et Y : deux directions perpendiculaires contenues dans le plan horizontal sous l'engin, tels que la vitesse relative estimée $\hat{\vec{v}}_s$ de l'antenne soit contenue dans le plan XOZ et orientée vers les X positifs.

Les coordonnées estimées de la position du centre de phase de l'antenne SAR 14 sont donc, dans ce référentiel :

$$\hat{P}_s = \begin{vmatrix} \hat{X}_s \\ \hat{Y}_s \\ \hat{Z}_s \end{vmatrix} = \begin{vmatrix} O \\ O \\ \hat{Z}_O \end{vmatrix} \qquad (4)$$

où l'altitude estimée $\hat{Z}_O$ est positive, l'indice S étant utilisé pour le radar SAR.

Les coordonnées estimées de la vitesse relative de l'antenne 14 sont :

$$\hat{V}_S = \begin{vmatrix} \hat{V}_x \\ \hat{V}_y \\ \hat{V}_z \end{vmatrix} = \begin{vmatrix} \hat{V}_x \\ 0 \\ \hat{V}_z \end{vmatrix} \qquad (5)$$

On définit également l'ortho-vitesse estimée par :

$$\hat{V}_\perp = \begin{vmatrix} -\hat{V}_z \\ 0 \\ \hat{V}_x \end{vmatrix} \qquad (6)$$

Le passage des coordonnées estimées de la position et de la vitesse de l'engin fournies de manière nominale par la centrale 10 aux coordonnées estimées de la position et de la vitesse du centre de phase de l'antenne SAR 14 peut être effectué en utilisant les relations classiques de composition des mouvements par prise en compte des bras de leviers entre le centre de gravité de l'engin et le centre de phase de l'antenne, ainsi que des vitesses de rotation estimées de l'engin.

Modélisation de la géométrie de prise d'image SAR

On souhaite imager le sol autour d'un point $\hat{M}_o$ défini par :

$$\hat{P}_M = \begin{vmatrix} \hat{X}_M \\ \hat{Y}_M \\ \hat{Z}_M \end{vmatrix} \qquad (7)$$

En supposant les dénivelées du terrain suffisamment faibles au voisinage de la zone survolée et imagée, on aura donc $\hat{Z}_M = O$.
Ce point $\hat{M}_o$ pourra, de manière équivalente, être défini par une direction de visée estimée $\hat{\vec{R}}_o$ telle que :

$$\vec{\hat{R}}_O = \overrightarrow{\hat{P}_S \hat{P}_M} = \begin{vmatrix} \hat{X}_M \\ \hat{Y}_M \\ -\hat{Z}_O \end{vmatrix} \qquad (8)$$

Du fait de la présence d'erreurs inertielles de position et de vitesse, le point Mo réellement imagé sera défini par :

$$P_M = \begin{vmatrix} \hat{X}_M + \delta_x \\ \hat{Y}_M + \delta_y \\ 0 \end{vmatrix} \qquad (9)$$

Modélisation de l'écart de mise en coïncidence

Conformément à l'invention, l'écart de mise en coïncidence à peut être modélisé sous la forme d'une fonction d'observation des erreurs inertielles de l'engin à l'instant de la réalisation de l'image SAR, qui peut être exprimée sous la forme suivante :

$$\delta = \begin{vmatrix} \delta x \\ \delta y \end{vmatrix} = \begin{vmatrix} \Delta X + f(\Delta Z, \Delta V) + \eta_x \\ \Delta Y + g(\Delta Z, \Delta V) + \eta_y \end{vmatrix} \qquad (10)$$

expression dans laquelle :

- $\Delta X$ et $\Delta Y$ représentent l'erreur inertielle de position de l'engin dans les deux directions de référence X et Y ;
- $\Delta Z$ représente l'erreur inertielle d'altitude de l'engin ;
- $\Delta V$ représente le vecteur des erreurs inertielles de vitesse du véhicule ; et
- $f(\Delta Z, \Delta V)$ et $g(\Delta Z, \Delta V)$ sont deux fonctions scalaires, connues analytiquement.

Un développement limité permet de réécrire :

$$\delta = \begin{vmatrix} \delta x \\ \delta y \end{vmatrix} = \begin{vmatrix} \Delta X + \alpha_1 \cdot \Delta Z + \alpha_2 \cdot \Delta Z^2 + \alpha_3 \cdot \Delta Z^3 + \vec{A} \cdot \overrightarrow{\Delta V} + \eta_x \\ \Delta Y + \beta_1 \cdot \Delta Z + \beta_2 \cdot \Delta Z^2 + \beta_3 \cdot \Delta Z^3 + \vec{B} \cdot \overrightarrow{\Delta V} + \eta_y \end{vmatrix} \qquad (11)$$

avec :

$$\alpha_1 = \frac{\hat{V}_z}{\hat{V}_x} \qquad \alpha_2 = 0 \qquad \alpha_3 = 0$$

$$\beta_1 = \frac{\vec{\hat{R}}_o \cdot \vec{\hat{V}}_\perp}{\hat{Y}_M \cdot \hat{V}_x} \qquad \beta_2 = -\frac{\| \vec{\hat{R}}_o \wedge \vec{\hat{V}}_s \|^2}{2 \hat{Y}_M^3 \cdot \hat{V}_x^2} \qquad \beta_3 = -\frac{\beta_1 \cdot \beta_2}{\hat{Y}_M}$$

$$\vec{A} = -\frac{1}{\hat{V}_x} \cdot \vec{\hat{R}}_o \qquad \vec{B} = \frac{\hat{X}_M}{\hat{Y}_M \cdot \hat{V}_x} \cdot \vec{\hat{R}}_o$$

Tous les termes précédents $\alpha_i$, $\beta_i$, $\vec{A}$ et $\vec{B}$ ne dépendent donc que de la cinématique de la trajectoire estimée et des coordonnées estimées du point du sol visé. Ils sont tous facilement calculables numériquement et peuvent être retrouvés par l'homme de l'art.

Les variables $\hat{V}_x$ et $\hat{Y}_M$ apparaissant au dénominateur de certains de ces termes traduisent de fait l'impossibilité de réaliser une image SAR avec une vitesse horizontale nulle ($\hat{V}_x = O$) et l'impossibilité d'imager un point du sol sous la trace de l'engin ($\hat{Y}_M = O$).

On constate donc que l'écart de mise en coïncidence est indépendant des erreurs inertielles d'attitude de l'engin. Ceci est dû au fait que, dans la pratique, ces erreurs d'attitude de l'engin ne vont engendrer, de par la composition des mouvements, que de très faibles erreurs de position et de vitesse de l'antenne SAR, erreurs qui seront totalement noyées dans le bruit de mesure $\eta$ .

La matrice de covariance $\Sigma\eta$ du bruit de mesure

$$\eta \; = \; \begin{vmatrix} \eta_x \\ \\ \eta_Y \end{vmatrix}$$

peut être exprimée sous la forme :

$$\Sigma\,\eta \; = \; \begin{bmatrix} \sigma_a^2 \; + \; \sigma_h^2 \; + \; \beta_1^2 . \sigma_z^2 & \beta_1 . \beta_2 . \sigma_z^2 \\ \\ \beta_1 . \beta_2 . \sigma_z^2 & \sigma_a^2 \; + \; \sigma_h^2 \; + \; \beta_2^2 . \sigma_z^2 \end{bmatrix} \qquad (12)$$

expression dans laquelle :

- $\sigma_a$ est l'écart type estimé du bruit numérique du processus de mise en coïncidence ;
- $\sigma_h$ et $\sigma_z$ sont respectivement les écarts types estimés des erreurs de localisation horizontales et verticales de la carte de référence.

Recalage de la navigation

Le recalage proprement dit de la navigation revient en fait à estimer, à l'instant de recalage, les diverses erreurs inertielles de position $\Delta P$ et de vitesse $\Delta V$ de l'engin, en se fondant sur l'observation de l'écart de mise en coïncidence $\delta$.

Soient $\Delta \hat{P}$ et $\Delta \hat{V}$ ces estimées d'erreurs. Le recalage de la navigation consiste alors à mettre à jour les estimées de la position et de la vitesse de l'engin selon les formules :

$$\hat{P}^+ \; = \; \hat{P}^- \; + \; \Delta\hat{P} \qquad (13)$$

$$\hat{V}^+ \; = \; \hat{V}^- \; + \; \Delta\hat{V}$$

dans lesquelles l'exposant "+" indique une estimée après recalage et l'exposant "-" une estimée avant recalage.

En utilisant le vecteur d'état U introduit précédemment, cette mise à jour ou recalage peut s'écrire :

$$\hat{U}^+ \; = \; \hat{U}^- \; + \; \Delta\hat{U} \qquad (14)$$

Le processus de recalage consiste donc à estimer au mieux six inconnues, $\Delta P$ et $\Delta V$, en ne disposant que de deux observations, $\delta x$ et $\delta y$.

La première méthode envisageable est la solution connue de ce problème : elle consiste à négliger, dans l'obser-

vation $\delta$, tous les effets des erreurs inertielles d'altitude et de vitesse et les effets des bruits de mesure, en posant directement :

$$\delta = \begin{vmatrix} \delta X \\ \delta Y \end{vmatrix} = \begin{vmatrix} \Delta \hat{X} \\ \Delta \hat{Y} \end{vmatrix} \qquad (15)$$

Ceci revient à dire que l'on assimile en totalité l'écart de mise en coïncidence $\delta$ à une erreur inertielle de position dans le plan horizontal XOY.

Cette méthode, vraisemblablement la plus simple que l'on puisse imaginer, est cependant peu précise.

En effet, s'il existe des erreurs inertielles d'altitude et de vitesse, celles-ci vont directement dégrader la précision de ce recalage. Des erreurs d'altitude de l'ordre de la centaine de mètres, ou des erreurs relatives de vitesse de l'ordre de quelques %, peuvent très facilement induire des erreurs de recalage de quelques centaines de mètres dans le plan horizontal.

Réciproquement, cette méthode ne permettra jamais d'estimer les erreurs inertielles d'altitude et de vitesse de l'engin.

De plus, la statistique des bruits de mesure n'étant pas prise en compte, cette méthode risque d'être peu robuste ; si les bruits de mesure deviennent trop importants, le recalage peut conduire à dégrader la navigation.

Cette méthode n'est donc pas envisageable lorsque l'on souhaite une grande précision et/ou une bonne sûreté de recalage.

Première méthode de recalage selon l'invention

La première méthode selon l'invention consiste à ne retenir que les termes linéaires, en fonction des erreurs inertielles de position et de vitesse, ainsi que les bruits de mesure dans l'écart de mise en coïncidence $\delta$ qui peut alors être exprimé de la manière suivante :

$$\delta = \begin{vmatrix} \delta X \\ \delta Y \end{vmatrix} \approx \begin{vmatrix} \Delta X + \alpha_1 . \Delta Z + \vec{A} . \vec{\Delta V} + \eta_x \\ \Delta Y + \beta_1 . \Delta Z + \vec{B} . \vec{\Delta V} + \eta_y \end{vmatrix} \qquad (16)$$

Il est alors possible de définir la matrice d'observation H de taille 2 x 6 par :

$$H = \begin{bmatrix} 1 & O & \alpha_1 & \vec{A}^t \\ O & 1 & \beta_1 & \vec{B}^t \end{bmatrix} \qquad (17)$$

Cette matrice est telle que l'écart de mise en coïncidence $\delta$ peut s'exprimer très simplement en fonction de l'erreur d'estimation $\Delta U$ du vecteur d'état U par :

$$\delta \approx H. \Delta U + \eta \qquad (18)$$

Sous cette dernière forme, le problème se présente donc comme l'observation linéaire bruitée d'erreurs que l'on cherche à estimer.

La solution à ce problème est alors l'utilisation d'une méthode d'estimation, dite des moindres carrés, faisant appel à la forme récursive d'un filtre de KALMAN-BUCY.

Une estimée $\Delta\hat{U}$ de $\Delta U$ minimisant la covariance de l'erreur résiduelle est ainsi égale à :

$$\Delta \hat{U} \quad = \quad K.\delta \qquad (19)$$

la matrice de gains K, de taille 6 x 2, du filtre de KALMAN-BUCY valant :

$$K = \Sigma_U^- .H^t.(H.\,\Sigma_U^-\,.H^t+\Sigma\eta)^{-1} \qquad (20)$$

expression dans laquelle $\Sigma_U^-$ désigne la matrice de covariance de l'erreur $\Delta U$, définie par la relation (3), avant recalage.
L'erreur résiduelle d'estimation $\Delta U$ vaut, après recalage :

$$\Delta U^+ \quad = \quad \Delta U^- \; - \; \Delta \hat{U} \qquad (21)$$

et sa matrice de covariance associée est :

$$\Sigma_U^+ = (I_6-K.H).\,\Sigma_U^- \qquad (22)$$

avec $I_6$ désignant la matrice identité de taille 6 x 6.
La forme récursive de ce filtre, et en particulier le calcul de la matrice de covariance des erreurs résiduelles, permet ainsi d'effectuer plusieurs recalages successifs en se fondant sur l'acquisition et la mise en coïncidence de plusieurs images SAR.
Cette méthode se révèle beaucoup plus efficace et précise que la méthode connue et présente les avantages suivants :

- recalage complet des erreurs inertielles de position et de vitesse ;
- prise en compte de la statistique des bruits de mesure ;
- minimisation de l'erreur résiduelle de recalage ;
- utilisation possible avec des erreurs inertielles d'altitude de l'ordre de quelques dizaines de mètres ;
- utilisation possible avec des erreurs inertielles de vitesse elevées, de l'ordre de quelques % à quelques dizaines de % en relatif.

Cependant, cette méthode ne prend pas en compte les non-linéarités de l'écart de mise en coïncidence $\delta$ dues à l'erreur inertielle d'altitude $\Delta Z$. Son utilisation sera donc limitée à des erreurs d'altitude inertielle raisonnables de l'ordre de la centaine de mètres au plus, selon les conditions de la cinématique et de la géométrie de prise d'image SAR, et selon la précision de recalage souhaitée.
L'invention propose une seconde méthode de recalage permettant de prendre en compte les termes non linéaires du modèle de l'écart de mise en coïncidence.

Seconde méthode de recalage selon l'invention

La seconde méthode de recalage conforme à la présente invention permet de prendre pleinement en compte les non-linéarités dues aux erreurs d'altitude inertielle par l'utilisation de deux estimations successives.

Première itération

La première matrice de gains, notée K1, de taille 6 x 2, est définie par :

$$K_1 = \Sigma_U^- .H^t.(H.\,\Sigma_U^-\,.H^t+\Sigma\eta+\Sigma_z)^{-1} \qquad (23)$$

expression dans laquelle :

- $\Sigma_U^-$ désigne toujours la matrice de covariance des erreurs inertielles $\Delta U$ avant recalage ;
- H désigne toujours la matrice d'observation de taille 2 x 6 définie par la relation (17) ;
- $\Sigma_Z$ est une matrice de covariance permettant de prendre en compte les non-linéarités de la mesure $\delta$ sous la forme d'un pseudo-bruit, selon l'expression :

$$\Sigma_Z \;=\; \begin{bmatrix} O & O \\[1em] O & 2\beta_2^2 \cdot \sigma_{\Delta Z}^4 \end{bmatrix} \qquad (24)$$

dans laquelle :

- $\sigma_{\Delta Z}^2$ est la variance de l'erreur inertielle d'altitude $\Delta Z$ avant recalage, c'est-à-dire le troisième élément de la diagonale de $\Sigma_U^-$.

Calcul de la première estimée des erreurs inertielles

On obtient alors une première $\Delta \tilde{U}$ estimée des erreurs inertielles AU qui s'exprime selon l'expression :

$$\Delta \tilde{U} \;=\; K_1 \cdot \left| \begin{array}{l} \delta_x \\[1em] \delta_y \;-\; \beta_2 \cdot \sigma_{\Delta Z}^2 \end{array} \right. \qquad (25)$$

dans laquelle le terme correctif $\beta_2 . \sigma_{\Delta Z}^2$ permet d'obtenir une erreur résiduelle

$$dU \;=\; \Delta U \;-\; \Delta \tilde{U} \qquad (26)$$

dont la moyenne est nulle.

La covariance $\Sigma_U^*$ de cette erreur résiduelle dU s'obtient alors par :

$$\Sigma_U^* = (I_6 - K_1 . H). \Sigma_U^- \qquad (27)$$

Seconde itération

On construit, à partir de la première estimée , $\Delta \tilde{U}$ , une pseudo-mesure $\delta^*$ telle que :

$$\delta^* \;=\; \delta \;-\; H . \Delta \tilde{U} \;-\; \left| \begin{array}{l} O \\[1em] \beta_2 . \Delta \tilde{Z}^2 \;+\; \beta_3 . \Delta \tilde{Z}^3 \end{array} \right. \qquad (28)$$

Dans cette expression, $\Delta \tilde{Z}$ correspond à la première estimée de l'erreur inertielle d'altitude, c'est-à-dire à la troisième composante du vecteur $\Delta \tilde{U}$.

Cette pseudo-mesure à vérifie alors la formule :

$$\delta^* \approx H^* . dU + \eta \qquad (29)$$

dans laquelle la pseudo-matrice d'observation H*, de taille 2 x 6, vaut :

$$H^* = H + \begin{vmatrix} 0 & 0 & 0 & 0 & 0 & 0 \\ 0 & 0 & 2\beta_2 . \tilde{\Delta} Z + 3\beta_3 . \tilde{\Delta}^2 Z & 0 & 0 & 0 \end{vmatrix} \qquad (30)$$

Calcul de la seconde estimée des erreurs inertielles

La seconde estimée $\tilde{dU}$ des erreurs inertielles s'obtient alors de manière classique par la formule :

$$\tilde{dU} = K_2 . \delta^* \qquad (31)$$

dans laquelle la seconde matrice de gains $K_2$, de taille 6 x 2, est définie par :

$$K_2 = \Sigma_U^* . H^{*t} . (H^* . \Sigma_U^* . H^{*t} + \Sigma_\eta)^{-1} \qquad (32)$$

L'erreur inertielle globale estimée $\Delta^{\wedge}U$ vaut alors :

$$\hat{\Delta U} = \tilde{\Delta U} + \tilde{dU} \qquad (33)$$

et la matrice de covariance $\Sigma_U^+$ de l'erreur résiduelle $\Delta U^+$ après recalage est définie par les formules suivantes :

$$\Delta U^+ = \Delta U - \hat{\Delta U} \qquad (34)$$

$$\Sigma_U^+ = (I_6 - K_2 . H^*) . \Sigma_U^* \qquad (35)$$

La première itération de cette méthode est très similaire aux calculs de la première méthode présentée plus haut, mais comporte les avantages suivants :

- introduction du pseudo-bruit de non-linéarités $\Sigma_Z$ qui permet de s'affranchir de divergences d'estimation constatées lorsque le bruit de mesure $\Sigma\eta$ est faible, cette correction évitant alors à l'estimateur d'accorder une confiance trop grande à la mesure ;
- recentrage de la mesure par le terme correctif $\beta_2 . \sigma_{\Delta Z}^2$ qui permet d'obtenir une erreur d'estimation centrée, ce qui n'est pas le cas avec la première méthode.

La seconde itération de cette seconde méthode revient en fait à utiliser une seconde mesure $\delta^*$ ne nécessitant pas la génération et mise en coïncidence d'une seconde image SAR.

C'est donc une étape relativement peu coûteuse en volume de traitements, tout en apportant un ordre de magnitude supplémentaire sur la précision du recalage.

Il est important de noter que le développement à l'ordre 3 de l'influence des erreurs inertielles d'altitude n'est pas seulement nécessaire pour des raisons de précision de recalage, mais sa raison d'être est surtout de garantir une convergence à coup sûr de l'estimation, ce que ne permet pas toujours un développement à l'ordre 2, et ce pour un surcoût de calculs négligeable.

Il est possible d'itérer encore le processus.

Dans la pratique, le gain de précision apporté par les boucles d'itération suivantes est négligeable. On observe en effet que la précision de recalage obtenue après ces deux itérations est suffisamment bonne pour noyer les non-linéarités résiduelles dans le bruit de mesure, et ceci même avec des erreurs d'altitude initiales de l'ordre de quelques kilomètres.

Enfin, pour des erreurs d'altitude inertielle faibles mais raisonnables, de l'ordre de la centaine de mètres, les non-linéarités de la mesure δ sont en général masquées par le bruit de mesure. Dans ces conditions, le calcul de l'erreur inertielle estimée peut être limité à la première itération et donne des résultats très comparables à ceux obtenus par la seconde méthode décrite ci-dessus.

Le recalage complet et précis de l'ensemble des six erreurs de position et de vitesse doit nécessairement se fonder sur plusieurs acquisitions et mises en coïncidences d'images SAR réalisées sous des conditions géométriques de visées indépendantes, c'est-à-dire avec des matrices d'observation H formant un système de rang au moins égal à 6. La forme récursive des traitements effectués permet aisément la prise en compte de plusieurs recalages successifs.

Le système qui vient d'être décrit présente de nombreux avantages :

- la précision de localisation est excellente, car elle est de l'ordre de grandeur de la résolution de l'image SAR ;
- il n'est pas nécessaire de disposer a priori d'une bonne estimation de l'altitude ou de la vitesse de l'engin afin d'effectuer le recalage de la navigation. En particulier, il n'est pas nécessaire d'embarquer un altimètre à bord de l'engin ;
- le recalage de la navigation s'effectue de manière optimale au sens de la covariance de l'erreur résiduelle ;
- le recalage complet des erreurs de position, y compris de l'altitude, peut être réalisé en utilisant au plus deux images SAR acquises dans des conditions géométriquement indépendantes, et en utilisant une seule image si l'erreur d'altitude est suffisamment faible ;
- le recalage complet des erreurs de position et de vitesse peut être réalisé en utilisant au plus trois images SAR acquises dans des conditions géométriquement indépendantes ;
- le recalage optimal de la navigation après l'acquisition de chaque image SAR permet de bénéficier de meilleures connaissances inertielles pour la réalisation des images SAR suivantes ;
- le recalage est robuste aux dispersions du système grâce à l'utilisation d'un filtre stochastique prenant en compte la statistique de ces dispersions ;
- le surcoût de calculs de la méthode de recalage conforme à l'invention est peu important par rapport aux méthodes plus simples, ce surcoût est en particulier négligeable, compte tenu de la charge de calculs nécessaire au traitement propre d'une image SAR.

Bien que, dans les exemples précédents, on ait donné des développements des fonctions scalaires f(ΔZ, ΔV) et g(ΔZ,ΔV) à des ordres limités à 3 en ΔZ et à 1 en ΔV, il va de soi que, sans sortir du cadre de la présente invention, on pourrait développer lesdites fonctions scalaires à des ordres supérieurs, la première estimée $\overset{\sim}{\Delta}U$ du vecteur des erreurs d'estimation, la pseudo-mesure δ* de l'écart de mise en coïncidence et la seconde estimée $\hat{\Delta U}$ du vecteur des erreurs d'estimation étant obtenues en adaptant les calculs au développement retenu, comme saurait le faire l'homme de l'art.

Il va de soi que le recalage de la navigation conformément à la présente invention peut également être utilisé pour calibrer en vol les défauts de la centrale inertielle utilisée.

**Revendications**

1. Système embarqué de navigation pour un engin aérien du type comportant une centrale inertielle de navigation (10) délivrant une estimation de la position et de la vitesse du véhicule par rapport à la surface terrestre, un radar (12) à visée latérale et à synthèse d'ouverture SAR produisant une image radar SAR du territoire au voisinage du point (Mo) survolé par le véhicule, des moyens (16) de mémoire contenant une carte de référence du territoire survolé, des moyens (17) de comparaison par mise en coïncidence d'une image radar SAR produite en vol avec la carte de référence mémorisée et fournissant un écart à de mise en coïncidence selon deux directions perpendiculaires et des moyens de calcul (18), reliés aux moyens de mémoire (16), à la centrale inertielle de navigation (10) et aux moyens de comparaison (17), qui comportent des moyens à filtre du type de KALMAN, et qui délivrent une innovation au filtre de KALMAN pour l'estimation des erreurs inertielles de position et de vitesse en fonction de l'écart de mise en coïncidence δ, caractérisé en ce que lesdits moyens de calcul (18) sont adaptés à calculer l'écart de mise en coïncidence en fonction du vecteur des erreurs d'estimation ΔU associé au vecteur d'état U constitué par les composantes des vecteurs P,V de la position et de la vitesse relative du véhicule, sous la forme d'une observation bruitée

$$\delta = \left| \begin{array}{l} \delta x \\ \delta y \end{array} \right. = \left| \begin{array}{l} \Delta X + f(\Delta Z, \Delta V) + \eta_x \\ \Delta Y + g(\Delta Z, \Delta V) + \eta_y \end{array} \right.$$

dans laquelle :

- $\eta$ est le vecteur d'erreur de mise en coïncidence selon lesdites deux directions perpendiculaires $\eta x$, $\eta y$ ;
- $\Delta X$ et $\Delta Y$ représentent l'erreur inertielle de position du véhicule dans lesdites deux directions perpendiculaires horizontales ;
- $\Delta Z$ représente l'erreur inertielle d'altitude du véhicule ;
- $\Delta V$ représente le vecteur des erreurs inertielles de vitesse du véhicule ; et
- $f(\Delta Z, \Delta V)$ et $g(\Delta Z, \Delta V)$ sont deux fonctions scalaires ; et en ce que le filtre est un filtre de KALMAN-BUCY de matrice de gains K telle que l'estimée $\Delta\hat{U}$ du vecteur des erreurs d'estimation soit égale à

$$\Delta\hat{U} = K.\delta$$

2. Système selon la revendication 1,
   caractérisé :

   - en ce que lesdites fonctions scalaires $f(\Delta Z, \Delta V)$ et $g(\Delta Z, \Delta V)$ sont telles que le modèle d'observation de l'écart de mise en coïncidence soit tel que :

$$\delta = \left| \begin{array}{l} \delta X \\ \delta Y \end{array} \right. = \left| \begin{array}{l} \Delta X + \alpha_1 . \Delta Z + \vec{A}.\overrightarrow{\Delta V} + \eta_x \\ \Delta Y + \beta_1 . \Delta Z + \vec{B}.\overrightarrow{\Delta V} + \eta_y \end{array} \right.$$

   auquel est associée une matrice d'observation

$$H = \left[ \begin{array}{cccc} 1 & O & \alpha_1 & \vec{A}^t \\ O & 1 & \beta_1 & \vec{B}^t \end{array} \right]$$

   dans laquelle les termes $\alpha 1$, $\beta 1$, $\vec{A}$ et $\vec{B}$ ne dépendent que de la cinématique et la trajectoire estimée et des coordonnées estimées du point du sol visé,

   - en ce que la matrice de gains du filtre de KALMAN-BUCY vaut

$$K = \Sigma_U^- . H^t.(H. \Sigma_U^- .H^t + \Sigma\eta)^{-1}$$

   $\Sigma_U^-$ désignant la matrice de covariance du vecteur des erreurs d'estimation avant recalage,
   $\Sigma_\eta$ désignant la matrice de covariance du vecteur d'erreur de mise en coïncidence,

   - et en ce que les moyens de recalage déterminent l'erreur résiduelle d'estimation après recalage $\Delta U^+$ selon la formule :

$$\Delta U^+ = \Delta U^- - \Delta \hat{U}$$

sa matrice de covariance $\Sigma_U^+$ valant :

$$\Sigma_U^+ = (I-K.H).\ \Sigma_U^-$$

avec I désignant la matrice identité.

3. Système selon la revendication 1,
caractérisé :

- en ce que lesdites fonctions scalaires $f(\Delta Z, \Delta V)$ et $g(\Delta Z, \Delta V)$ sont telles que le modèle d'observation de l'écart de mise en coïncidence soit tel que :

$$\delta = \left| \begin{array}{c} \delta x \\ \delta y \end{array} \right. = \left| \begin{array}{c} \Delta X + \alpha_1 . \Delta Z + \alpha_2 . \Delta Z^2 + \alpha_3 . \Delta Z^3 + \vec{A}.\overrightarrow{\Delta V} + \eta_x \\ \Delta Y + \beta_1 . \Delta Z + \beta_2 . \Delta Z^2 + \beta_3 . \Delta Z^3 + \vec{B}.\overrightarrow{\Delta V} + \eta_y \end{array} \right.$$

auquel est associée une matrice d'observation

$$H = \left[ \begin{array}{cccc} 1 & 0 & \alpha_1 & \vec{A}^t \\ 0 & 1 & \beta_1 & \vec{B}^t \end{array} \right]$$

les termes $\alpha i$, $\beta i$, $\vec{A}$ et $\vec{B}$ ne dépendant que de la cinématique de la trajectoire estimée et des coordonnées estimées du point du sol visé,
- en ce qu'une première estimée $\Delta \tilde{U}$ du vecteur des erreurs d'estimation vaut :

$$\Delta \tilde{U} = K_1 . \left| \begin{array}{c} \delta_x \\ \delta_y - \beta_2 . \sigma_{\Delta z}^2 \end{array} \right.$$

avec $\sigma_{\Delta z}^2$ désignant la variance de l'erreur inertielle d'altitude $\Delta Z$ avant recalage et
avec K1 qui représente une première matrice de gains des moyens à filtre de KALMAN-BUCY et qui vaut :

$$K_1 = \Sigma_U^- .H^t.(H.\ \Sigma_U^- .H^t + \Sigma\eta + \Sigma_z)^{-1}$$

$\Sigma_U^-$ désignant la matrice de covariance du vecteur des erreurs d'estimation avant recalage,
$\Sigma\eta$ désignant la matrice de covariance du vecteur d'erreur de mise en coïncidence, et
$\Sigma_z$ est une matrice qui vaut :

$$\Sigma_z \; = \; \begin{bmatrix} O & O \\ \\ O & 2\beta_2^2 \cdot \sigma_{\triangle Z}^4 \end{bmatrix}$$

- et en ce que les moyens de recalage déterminent une première erreur résiduelle d'estimation dU selon la formule

$$dU \; = \; \triangle U \; - \; \triangle \tilde{U}$$

sa matrice de covariance $\Sigma_U^*$ valant

$$\Sigma_U^* = (I - K_1 \cdot H) \cdot \Sigma_U^-$$

avec I désignant la matrice identité.

4. Système selon la revendication 3,
caractérisé en ce que les moyens de recalage calculent, à partir de ladite première estimée $\triangle \tilde{U}$ du vecteur des erreurs d'estimation, une pseudo-mesure $\delta^*$ de l'écart de mise en coïncidence telle que :

$$\delta^* \; = \; \delta \; - \; H \cdot \triangle \tilde{U} \; - \; \begin{vmatrix} O \\ \\ \beta_2 \cdot \triangle \tilde{Z}^2 \; + \; \beta_3 \cdot \triangle \tilde{Z}^3 \end{vmatrix}$$

avec $\triangle \tilde{Z}$ désignant la composante d'altitude de ladite première estimée, et telle que

$$\delta^* \approx H^* \cdot dU + \eta$$

et à laquelle est associée une pseudo-matrice d'observation H * qui vaut

$$H^* \; = \; H \; + \; \begin{bmatrix} O & O & O & O & O & O \\ \\ O & O & 2\beta_2 \cdot \triangle \tilde{Z} \; + \; 3\beta_3 \cdot \triangle \tilde{Z}^2 & O & O & O \end{bmatrix}$$

- en ce qu'une seconde estimée $\tilde{dU}$ du vecteur des erreurs d'estimation vaut

$$\tilde{dU} \; = \; K_2 \cdot \delta^*$$

avec $K_2$ désignant une seconde matrice de gains des moyens à filtre de KALMAN-BUCY et qui vaut

$$K_2 = \Sigma_U^* \cdot H^{*t} \cdot (H^* \cdot \Sigma_U^* \cdot H^{*t} + \Sigma \eta)^{-1}$$

- et en ce que les moyens de recalage déterminent une estimation globale $\Delta\hat{U}$ selon la formule

$$\Delta\hat{U} = \Delta\tilde{U} + \hat{d\tilde{U}}$$

la matrice de covariance $\Sigma_U^+$ de l'erreur résiduelle $\Delta U^+$ après recalage étant définie par les formules

$$\Delta U^+ = \Delta U - \Delta\hat{U},$$

et

$$\Sigma_U^+ = (I-K_2.H^*). \Sigma_U^*$$

5. Système selon l'une des revendications 3 ou 4, caractérisé en ce que la matrice $\Sigma_\eta$ de covariance du vecteur d'erreur de mise en coïncidence vaut :

$$\Sigma\eta = \begin{bmatrix} \sigma_a^2 + \sigma_h^2 + \beta_1^2.\sigma_z^2 & \beta_1.\beta_2.\sigma_z^2 \\ \beta_1.\beta_2.\sigma_z^2 & \sigma_a^2 + \sigma_h^2 + \beta_2^2.\sigma_z^2 \end{bmatrix}$$

avec $\sigma_a$ désignant l'écart type estimé du bruit numérique du processus de mise en coïncidence, et $\sigma_h$ et $\sigma_z$ désignant respectivement les écarts types estimés des erreurs de localisation horizontales et verticales de la carte de référence.

6. Système selon l'une quelconque des revendications 2 à 5, caractérisé en ce que les termes $\alpha i$, $\beta i$, $\vec{A}$ et $\vec{B}$ sont déterminés selon les relations suivantes :

$$\alpha_1 = \frac{\hat{V}_z}{\hat{V}_x} \qquad \alpha_2 = 0 \qquad \alpha_3 = 0$$

$$\beta_1 = \frac{\vec{\hat{R}}_O.\vec{\hat{V}}_\perp}{\hat{Y}_M.\hat{V}_x} \qquad \beta_2 = -\frac{\|\vec{\hat{R}}_O \wedge \vec{\hat{V}}_s\|^2}{2\hat{Y}_M^3.\hat{V}_x^2} \qquad \beta_3 = -\frac{\beta_1.\beta_2}{\hat{Y}_M}$$

$$\vec{A} = -\frac{1}{\hat{V}_x}.\vec{\hat{R}}_O \qquad \vec{B} = \frac{\hat{X}_M}{\hat{Y}_M.\hat{V}_x}.\vec{\hat{R}}_O$$

dans lesquelles :

$$\hat{V}_s = \cdot \left| \begin{array}{c} \hat{V}_x \\ \hat{V}_y \\ \hat{V}_z \end{array} \right.$$

est l'estimée de la vitesse relative de l'antenne SAR du radar dont les coordonnées estimées du centre de phase sont :

$$\hat{P}_s = \left| \begin{array}{c} \hat{X}_s \\ \hat{Y}_s \\ \hat{Z}_s \end{array} \right.$$

$\hat{v}_\perp$ est l'ortho-vitesse égale à

$$\left| \begin{array}{c} - \hat{V}_z \\ \hat{V}_y \\ \hat{V}_x \end{array} \right.$$

$$\vec{R}_O = \vec{\hat{P}}_s \quad \vec{\hat{P}}_M$$

est la direction de visée du point $\hat{M}$ du sol de coordonnées

$$P_M = \left| \begin{array}{c} \hat{X}_M \\ \hat{Y}_M \\ \hat{Z}_M \end{array} \right.$$

ces valeurs étant exprimées dans un référentiel orthonormé T = (O,X,Y,Z) défini au point courant estimé de la trajectoire par :

-  O : origine, point du sol à la verticale estimée du centre de phase de l'antenne SAR ;
-  Z : verticale ascendante passant par la position estimée du centre de phase de l'antenne SAR ;
-  X et Y : dans le plan horizontal sous l'engin, tels que la vitesse relative estimée $\vec{\hat{v}}_s$ de l'antenne soit contenue dans le plan (XOZ) et orientée vers les x positifs, ces valeurs étant, dans ce repère, égales à :

$$\hat{P}_S = \begin{vmatrix} O \\ O \\ \hat{Z}_O \end{vmatrix} \qquad \hat{V}_S = \begin{vmatrix} \hat{V}_x \\ O \\ \hat{V}_z \end{vmatrix} \qquad \hat{V}_\perp = \begin{vmatrix} -\hat{V}_z \\ O \\ \hat{V}_x \end{vmatrix}$$

$$\hat{P}_M = \begin{vmatrix} \hat{X}_M \\ \hat{Y}_M \\ O \end{vmatrix} \qquad et \qquad \vec{Ro} = \begin{vmatrix} \hat{X}_M \\ \hat{Y}_M \\ -\hat{Z}_O \end{vmatrix}$$

## Claims

1. On-board navigation system for an aerial craft of the type including an inertial navigation facility (10) delivering an estimation of the position and velocity of the vehicle with respect to the terrestrial surface, an SAR synthetic aperture sideways looking radar (12) producing an SAR radar image of the territory in the vicinity of the point (Mo) overflown by the vehicle, memory means (16) containing a reference map of the territory overflown, means (17) for comparison by aligning a SAR radar image produced in flight with the stored reference map and providing an alignment deviation δ in two perpendicular directions and computing means (18) linked to the memory means (16), to the inertial navigation facility (10) and to the means of comparison (17), which include filter means of the KALMAN type, and which deliver an inceptor to the KALMAN filter for the estimation of the inertial errors in position and in velocity as a function of the alignment deviation δ, characterized in that the said computing means (18) are designed to compute the alignment deviation as a function of the estimation error vector ΔU associated with the state vector U consisting of the components of the vectors P, V for the position and relative velocity of the vehicle, in the form of a noise-affected observation

$$\delta = \begin{vmatrix} \delta x \\ \delta y \end{vmatrix} = \begin{vmatrix} \Delta X + f(\Delta Z, \Delta V) + \eta_x \\ \Delta Y + g(\Delta Z, \Delta V) + \eta_y \end{vmatrix}$$

in which:

- η is the vector of alignment error in the said two perpendicular directions ηx, ηy;
- ΔX and ΔY represent the inertial error in position of the vehicle in the said two horizontal perpendicular directions;
- ΔZ represents the inertial error in altitude of the vehicle;
- ΔV represents the vector of inertial errors in velocity of the vehicle; and
- f(ΔZ, ΔV) and g(ΔZ, ΔV) are two scalar functions; and in that the filter is a KALMAN-BUCY filter with gain matrix K such that the estimate Δ^U of the vector of estimation errors is equal to

$$\Delta\hat{U} = K.\delta$$

2. System according to Claim 1, characterized in that:

- the said scalar functions f(ΔZ, ΔV) and g(ΔZ, ΔV) are such that the observation model of the alignment deviation is such that:

$$\delta = \begin{vmatrix} \delta X \\ \delta Y \end{vmatrix} \begin{vmatrix} \Delta X + \alpha_1 . \Delta Z + \vec{A} . \vec{\Delta V} + \eta_x \\ \Delta Y + \beta_1 . \Delta Z + \vec{B} . \vec{\Delta V} + \eta_y \end{vmatrix}$$

with which is associated an observation matrix

$$H = \begin{bmatrix} 1 & 0 & \alpha_1 & \vec{A}^t \\ 0 & 1 & \beta_1 & \vec{B}^t \end{bmatrix}$$

in which the terms $\alpha 1$, $\beta 1$, $\vec{A}$ and $\vec{B}$ depend only on the kinematics and the estimated trajectory and on the estimated coordinates of the sighted point on the ground,

- the gain matrix of the KALMAN-BUCY filter equals

$$K = \Sigma_U^- . H^t . (H. \Sigma_U^- . H^t + \Sigma \eta)^{-1}$$

$\Sigma_U^-$ denoting the covariance matrix of the vector of estimation errors before adjustment,
$\Sigma \eta$ denoting the covariance matrix of the alignment error vector,

- and the means of adjustment determine the post-adjustment residual estimation error $\Delta U^+$ according to the formula:

$$\Delta U^+ = \Delta U^- - \hat{\Delta U}$$

its covariance matrix $\Sigma_U^+$ being equal to:

$$\Sigma_U^+ = (I - K.H). \Sigma_U^-$$

with I denoting the identity matrix.

3. System according to Claim 1, characterized in that:

- the said scalar functions $f(\Delta Z, \Delta V)$ and $g(\Delta Z, \Delta V)$ are such that the observation model of the alignment deviation is such that:

$$\delta = \begin{vmatrix} \delta x \\ \delta y \end{vmatrix} = \begin{vmatrix} \Delta X + \alpha_1 . \Delta Z + \alpha_2 . \Delta Z^2 + \alpha_3 . \Delta Z^3 + \vec{A} . \vec{\Delta V} + \eta_x \\ \Delta Y + \beta_1 . \Delta Z + \beta_2 . \Delta Z^2 + \beta_3 . \Delta Z^3 + \vec{B} . \vec{\Delta V} + \eta_y \end{vmatrix}$$

with which is associated an observation matrix

$$H = \begin{bmatrix} 1 & 0 & \alpha_1 & \vec{A}^t \\ 0 & 1 & \beta_1 & \vec{B}^t \end{bmatrix}$$

the terms $\alpha_i$, $\beta_i$, $\vec{A}$ and $\vec{B}$ depending only on the kinematics of the estimated trajectory and on the estimate coordinates of the sighted point on the ground,

- a first estimate $\widetilde{\Delta U}$ of the vector of estimation errors is equal to:

$$\widetilde{\Delta U} = K_1 \cdot \begin{vmatrix} \delta_x \\ \delta_y - \beta_2 \cdot \sigma_{\Delta z}^2 \end{vmatrix}$$

with a $\sigma_{\Delta z}^2$ denoting the variance of the inertial error in altitude $\Delta Z$ before adjustment and with K1 which represents a first gain matrix of the KALMAN-BUCY filter means and which is equal to:

$$k_1 = \Sigma_U^- \cdot H^t \cdot (H \cdot \Sigma_U^- \cdot H^t + \Sigma\eta + \Sigma_z)^{-1}$$

$\Sigma_U^-$ denoting the covariance matrix of the vector of estimation errors before adjustment,
$\Sigma\eta$ denoting the covariance matrix of the alignment error vector, and
$\Sigma_z$ is a matrix which is equal to:

$$\Sigma_z = \begin{bmatrix} 0 & 0 \\ 0 & 2\beta_2^2 \cdot \sigma_{\Delta z}^4 \end{bmatrix}$$

- and the means of adjustment determine a first residual estimation error dU according to the formula

$$dU = \Delta U - \widetilde{\Delta U}$$

its covariance matrix $\Sigma_U^*$ being equal to

$$\Sigma_U^* = (I - K_1 \cdot H) \cdot \Sigma_U^-$$

with I denoting the identity matrix.

4. System according to Claim 3, characterized in that the means of adjustment compute, from the said first estimate $\widetilde{\Delta U}$ of the vector of estimation errors, a pseudo-measure $\delta^*$ of the alignment deviation such that:

$$\delta^* = \delta - H \cdot \widetilde{\Delta U} - \begin{vmatrix} 0 \\ \beta_2 \cdot \widetilde{\Delta Z}^2 + \beta_3 \cdot \widetilde{\Delta Z}^3 \end{vmatrix}$$

with $\tilde{\Delta z}$ denoting the altitude component of the said first estimate, and such that

$$\delta^* \approx H^*.dU + \eta$$

and with which is associated an observation pseudo-matrix $H^+$ which is equal to

$$H^* = H + \cdot \begin{bmatrix} 0 & 0 & 0 & & 0 & 0 & 0 \\ 0 & 0 & 2\beta_2.\tilde{\Delta z} + 3\beta_3.\tilde{\Delta z}^2 & 0 & 0 & 0 \end{bmatrix}$$

- a second estimate $\tilde{dU}$ of the vector of estimation errors is equal to

$$\tilde{dU} = K_2.\delta^*$$

with $K_2$ denoting a second gain matrix of the KALMAN-BUCY filter means and which is equal to

$$K_2 = \Sigma_U^* .H^{*t}.(H^*. \Sigma_U^* .H^{*t} + \Sigma\eta)^{-1}$$

- and the means of adjustment determine a global estimation $\hat{\Delta U}$ according to the formula

$$\hat{\Delta U} = \tilde{\Delta U} + \tilde{dU}$$

the covariance matrix $\Sigma_U^*$ of the residual error $\Delta U^+$ after adjustment being defined by the formulae

$$\Delta U^+ = \Delta U - \hat{\Delta U},$$

and

$$\Sigma_U^+ = (I - K_2.H^*). \Sigma_U^*$$

**5.** System according to one of Claims 3 or 4, characterized in that the covariance matrix $\Sigma\eta$ of the alignment error vector is equal to:

$$\Sigma\eta = \begin{bmatrix} \sigma_a^2 + \sigma_h^2 + \beta_1^2.\sigma_z^2 & \beta_1.\beta_2.\sigma_z^2 \\ \beta_1.\beta_2.\sigma_z^2 & \sigma_a^2 + \sigma_h^2 + \beta_2^2.\sigma_z^2 \end{bmatrix}.$$

with $\sigma_a$ denoting the estimated standard deviation of the numerical noise of the alignment procedure, and $\sigma_h$ and $\sigma_z$ denoting respectively the estimated standard deviations of the horizontal and vertical location errors of the reference map.

6. System according to any one of Claims 2 to 5, characterized in that the terms $\alpha i$, $\beta i$, $\vec{\hat{A}}$ and $\vec{B}$ are determined according to the following relations:

$$\alpha_1 = \frac{\hat{V}_z}{\hat{V}_x} \qquad \alpha_2 = 0 \qquad \alpha_3 = 0$$

$$\beta_1 = \frac{\vec{\hat{R}}_o \cdot \vec{\hat{V}}_\perp}{\hat{Y}_M \cdot \hat{V}_x} \qquad \beta_2 = -\frac{\| \vec{\hat{R}}_o \wedge \vec{\hat{V}}_s \|^2}{2\hat{Y}_M^3 \cdot \hat{V}_x^2} \qquad \beta_3 = -\frac{\beta_1 \cdot \beta_2}{\hat{Y}_M}$$

$$\vec{A} = -\frac{1}{\hat{V}_x} \cdot \vec{\hat{R}}_o \qquad \vec{B} = \frac{\hat{X}_M}{\hat{Y}_M \cdot \hat{V}_x} \cdot \vec{\hat{R}}_o$$

in which:

$$\hat{V}_s = \begin{vmatrix} \hat{V}_x \\ \hat{V}_y \\ \hat{V}_z \end{vmatrix}$$

is the estimate of the relative velocity of the SAR antenna of the radar, the estimated coordinates of the phase centre of which are:

$$\hat{P}_s = \begin{vmatrix} \hat{X}_s \\ \hat{Y}_s \\ \hat{Z}_s \end{vmatrix}$$

$\hat{V}_\perp$ is the ortho-velocity equal to

$$\begin{vmatrix} -\hat{V}_z \\ \hat{V}_y \\ \hat{V}_x \end{vmatrix}$$

$$\vec{R}_o = \vec{P}_s \; \vec{P}_M$$

is the direction of sighting of the point $\hat{M}$ on the ground with coordinates

$$P_M = \begin{vmatrix} \hat{X}_M \\ \hat{Y}_M \\ \hat{Z}_M \end{vmatrix}$$

these values being expressed in an orthonormal reference frame T = (O, X, Y, Z) defined at the estimated current point of the trajectory by:

-   O: origin, point on the ground at the estimated vertical of the phase centre of the SAR antenna;
-   Z: upwards vertical passing through the estimated position of the phase centre of the SAR antenna;
-   X and Y: in the horizontal plane beneath the craft, such that the estimated relative velocity $\vec{\hat{v}}$ of the antenna is contained in the plane (XOZ) and is directed towards the positive x axis,

these values being, in this reference frame, equal to:

$$\hat{P}_s = \begin{vmatrix} O \\ O \\ \hat{Z}_O \end{vmatrix} \qquad \hat{V}_s = \begin{vmatrix} \hat{V}_x \\ O \\ \hat{V}_z \end{vmatrix} \qquad \hat{V}_\perp = \begin{vmatrix} -\hat{V}_z \\ O \\ \hat{V}_x \end{vmatrix}$$

$$\hat{P}_M = \begin{vmatrix} \hat{X}_M \\ \hat{Y}_M \\ O \end{vmatrix} \qquad \text{and} \qquad \vec{Ro} = \begin{vmatrix} \hat{X}_M \\ \hat{Y}_M \\ -\hat{Z}_O \end{vmatrix}$$

**Patentansprüche**

1.  Bordnavigationssystem für ein Luftfahrzeug mit einer Trägheitsnavigationsanlage (10) zur Abgabe einer Standort- und Geschwindigkeitsschätzung des Fahrzeugs gegenüber der Erdoberfläche, einem Seitensichtradar (12) mit synthetischer Apertur SAR zur Erzeugung einer SAR-Radarabbildung des Geländes im Bereich des vom Fahrzeug überflogenen Punktes (Mo), Speichermitteln (16) mit einer Referenzkarte des überflogenen Geländes, Mitteln (17) zum Koinzidenzvergleich eines während des Fluges aufgenommenen SAR-Radarbildes mit der gespeicherten Referenzkarte, die eine Koinzidenzabweichung δ nach zwei senkrechten Richtungen abgeben, und Rechenmitteln (18), die mit den Speichermitteln (16), der Trägheitsnavigationsanlage (10) und den Vergleichsmitteln (17) verbunden sind und Filtermittel in der Art des KALMAN-Filters haben und einen Befehl an den KALMAN-Filter zur Schätzung der Standort- und Geschwindigkeits-Trägheitsfehler in Abhängigkeit von der Koinzidenzabweichung δ geben,
dadurch gekennzeichnet, daß die Rechenmittel (18) in der Lage sind, die Koinzidenzabweichung in Abhängigkeit vom Vektor der Schätzfehler ΔU, der dem aus den Komponenten der Vektoren P,V für Standort und relative Geschwindigkeit des Fahrzeugs bestehenden Zustandsvektor U zugeordnet ist, in Form einer Geräuschbeobachtung:

$$\delta \; = \; \left| \begin{array}{c} \delta x \\ \\ \delta y \end{array} \right| \; = \; \left| \begin{array}{l} \Delta X \; + \; f(\Delta Z, \Delta V) \; + \; \eta_x \\ \\ \Delta Y \; + \; g(\Delta Z, \Delta V) \; + \; \eta_y \end{array} \right.$$

zu berechnen, in der:

- $\eta$ der Koinzidenzfehlervektor nach den beiden senkrechten Richtungen $\eta x$, $\eta y$ ist;
- $\Delta x$ und $\Delta Y$ den Standort-Trägheitsfehler des Fahrzeugs in den beiden horizontalen senkrecht zueinander verlaufenden Richtungen darstellen;
- $\Delta Z$ den Höhen-Trägheitsfehler des Fahrzeugs darstellt;
- $\Delta V$ den Vektor der Geschwindigkeits-Trägheitsfehler des Fahrzeugs darstellt und
- $f(\Delta Z, \Delta V)$ und $g(\Delta Z, \Delta V)$ zwei skalare Funktionen sind;

und dadurch, daß der Filter ein KALMAN-BUCY-Filter mit der Gewinnmatrix K ist, so daß der Schätzwert $\Delta \hat{\,} U$ des Schätzfehlervektors gleich

$$\hat{\Delta U} \; = \; K . \delta$$

ist.

2. System nach Anspruch 1,
   dadurch gekennzeichnet:

   - daß die skalaren Funktionen $f(\Delta Z, \Delta V)$ und $g(\Delta Z, \Delta V)$ derart sind, daß das Beobachtungsmodell der Koinzidenzabweichung lautet:

$$\delta \; = \; \left| \begin{array}{c} \delta x \\ \\ \delta y \end{array} \right| \; \overset{.}{\sim} \; \left| \begin{array}{l} \Delta X \; + \; \alpha_1 . \Delta Z \; + \; \vec{A} . \vec{\Delta V} \; + \; \eta_x \\ \\ \Delta Y \; + \; \beta_1 . \Delta Z \; + \; \vec{B} . \vec{\Delta V} \; + \; \eta_y \end{array} \right.$$

dem eine Beobachtungsmatrix

$$H \; = \; \left[ \begin{array}{cccc} 1 & O & \alpha_1 & \vec{A}^t \\ \\ O & 1 & \beta_1 & \vec{B}^t \end{array} \right]$$

zugeordnet ist, in der die Glieder $\alpha1$, $\beta1$, $\vec{A}$ und $\vec{B}$ nur von der Kinematik der geschätzten Flugbahn und den geschätzten Koordinaten des beobachteten Bodenpunktes abhängen,

- daß die Gewinnmatrix des KALMAN-BUCY-Filters gleich

$$K = \Sigma_U^- . H^t . (H . \Sigma_U^- . H^t + \Sigma \eta)^{-1}$$

ist, wobei $\Sigma_U^-$ die Kovarianzmatrix des Vektors der Schätzfehler vor der Korrektur bezeichnet,
$\Sigma \eta$ die Kovarianzmatrix des Koinzidenzfehlervektors bezeichnet,

- daß die Korrekturmittel den Rest-Schätzfehler nach der Korrektur $\Delta U^+$ nach der Formel:

$$\Delta U^+ = \Delta U^- - \widehat{\Delta U}$$

bestimmen, wobei dessen Kovarianzmatrix $\Sigma_U{}^+$ gleich:

$$\Sigma_U{}^+ = (I-K.H).\Sigma_U{}^-$$

mit I als Identitätsmatrix ist.

3. System nach Anspruch 1,
dadurch gekennzeichnet:

- daß die skalaren Funktionen $f(\Delta Z, \Delta V)$ und $g(\Delta Z, \Delta V)$ derart sind, daß das Beobachtungsmodell der Koinzidenzabweichung lautet:

$$\delta = \begin{vmatrix} \delta x \\ \delta y \end{vmatrix} = \begin{vmatrix} \Delta X + \alpha_1.\Delta Z + \alpha_2.\Delta Z^2 + \alpha_3.\Delta Z^3 + \vec{A}.\vec{\Delta V} + \eta_x \\ \Delta Y + \beta_1.\Delta Z + \beta_2.\Delta Z^2 + \beta_3.\Delta Z^3 + \vec{B}.\vec{\Delta V} + \eta_y \end{vmatrix}$$

dem eine Beobachtungsmatrix

$$H = \begin{bmatrix} 1 & 0 & \alpha_1 & \vec{A}^t \\ 0 & 1 & \beta_1 & \vec{B}^t \end{bmatrix}$$

zugeordnet ist, in der die Glieder $\alpha_i$, $\beta_i$, $\vec{A}$ und $\vec{B}$ nur von der Kinematik der geschätzten Flugbahn und den geschätzten Koordinaten des beobachteten Bodenpunktes abhängen,

- und dadurch, daß ein erster Schätzwert $\widetilde{\Delta U}$ des Vektors der Schätzfehler lautet:

$$\widetilde{\Delta U} = K_1 . \begin{vmatrix} \delta_x \\ \delta_y - \beta_2.\sigma^2{}_{\Delta Z} \end{vmatrix}$$

mit $\sigma^2{}_{\Delta Z}$ als Bezeichnung für die Varianz des Höhen-Trägheitsfehlers $\Delta Z$ vor der Korrektur und $K1$ zur Darstellung einer ersten Gewinnmatrix der KALMAN-BUCY-Filtermittel, die lautet:

$$K_1 = \Sigma_U{}^-.H^t.(H.\Sigma_U{}^-.H^t+\Sigma\eta+\Sigma_z)^{-1}$$

in der
$\Sigma_U{}^-$ die Kovarianzmatrix des Vektors der Schätzfehler vor der Korrektur bezeichnet,
$\Sigma\eta$ die Kovarianzmatrix des Koinzidenzfehlervektors bezeichnet und
$\Sigma_z$ eine Matrix wie folgt ist:

$$\Sigma_z = \begin{bmatrix} O & O \\ O & 2\beta_2^2 \cdot \sigma_{\Delta z}^4 \end{bmatrix}$$

- und dadurch, daß die Korrekturmittel einen ersten Rest-Schätzfehler dU nach der Formel:

$$dU = \Delta U - \tilde{\Delta U}$$

bestimmen, dessen Kovarianzmatrix $\Sigma_U^*$ lautet:

$$\Sigma_U^* = (I - K_1 \cdot H) \cdot \Sigma_U^-$$

mit I zur Bezeichnung der Identitätsmatrix.

4. System nach Anspruch 3,
dadurch gekennzeichnet, daß die Korrekturmittel aus dem ersten Schätzwert $\tilde{\Delta U}$ des Vektors der Schätzfehler ein Pseudomaß $\delta^-$ der Koinzidenzabweichung der Form:

$$\delta^* = \delta - H \cdot \tilde{\Delta U} - \begin{vmatrix} O \\ \beta_2 \cdot \tilde{\Delta Z}^2 + \beta_3 \cdot \tilde{\Delta Z}^3 \end{vmatrix}$$

mit $\tilde{\Delta z}$ zur Bezeichnung der Höhenkomponente des ersten Schätzwerts und der Form

$$\delta^* \approx H^* \cdot dU + \eta$$

errechnen, dem eine Pseudo-Beobachtungsmatrix $H^*$ wie folgt

$$H^* = H + \begin{bmatrix} O & O & O & O & O & O \\ O & O & 2\beta_2 \cdot \tilde{\Delta Z} + 3\beta_3 \cdot \tilde{\Delta Z}^2 & O & O & O \end{bmatrix}$$

zugeordnet ist;

- dadurch, daß ein zweiter Schätzwert $\tilde{dU}$ des Vektors der Schätzfehler lautet:

$$\tilde{dU} = K_2 \cdot \delta^*$$

mit $K_2$ zur Bezeichnung einer zweiten Gewinnmatrix der KALMAN-BUCY-Filtermittel, die lautet:

$$K_2 = \Sigma_U^* \cdot H^{*t} \cdot (H^* \cdot \Sigma_U^* \cdot H^{*t} + \Sigma n)^{-1}$$

- und dadurch, daß die Korrekturmittel eine Gesamtschätzung $\Delta\hat{U}$ nach der Formel

$$\Delta\hat{U} = \Delta\tilde{U} \div \hat{dU}$$

bestimmen, wobei die Kovarianzmatrix $\Sigma_U^+$ des Restfehlers $\Delta U^*$ nach der Korrektur definiert wird durch die Formeln:

$$\Delta U^{\div} = \Delta U - \Delta\hat{U},$$

$$\Sigma_U^+ = (I-K_2.H^*).\Sigma_U^*$$

5. System nach einem der Ansprüche 3 oder 4,
dadurch gekennzeichnet, daß die Kovarianzmatrix $\Sigma\eta$ des Koinzidenzfehlervektors lautet:

$$\Sigma\eta = \begin{bmatrix} \sigma_a^2 \div \sigma_h^2 \div \beta_1^2.\sigma_z^2 & \beta_1.\beta_2.\sigma_z^2 \\ \beta_1.\beta_2.\sigma_{z^-}^2 & \sigma_a^2 \div \sigma_h^2 + \beta_2^2.\sigma_z^2 \end{bmatrix}$$

mit $\sigma_a$ zur Bezeichnung der geschätzten Standardabweichung des digitalen Geräuschs des Koinzidenzprozesses und
$\sigma_h$ und $\sigma_z$ zur Bezeichnung der geschätzten Standardabweichungen der horizontalen bzw. vertikalen Ortungsfehler der Referenzkarte.

6. System nach einem der Ansprüche 2 bis 5,
dadurch gekennzeichnet, daß die Glieder $\alpha i$, $\beta i$, $\vec{A}$ und $\vec{B}$ nach folgenden Beziehungen bestimmt werden:

$$\alpha_1 = \frac{\hat{V}_z}{\hat{V}_x} \qquad \alpha_2 = 0 \qquad \alpha_3 = 0$$

$$\beta_1 = \frac{\bar{\hat{R}}_o \cdot \bar{\hat{V}}_1}{\hat{Y}_M \cdot \hat{V}_x} \qquad \beta_2 = -\frac{\|\bar{\hat{R}}_o \wedge \bar{\hat{V}}_s\|^2}{2\hat{Y}_M^3 \cdot \hat{V}_x^2} \qquad \beta_3 = -\frac{\beta_1 \cdot \beta_2}{\hat{Y}_M}$$

$$\bar{A} = -\frac{1}{\hat{V}_x} \cdot \bar{\hat{R}}_o \qquad \bar{B} = \frac{\hat{X}_M}{\hat{Y}_M \cdot \hat{V}_x} \cdot \bar{\hat{R}}_o$$

in denen

$$\hat{V}_S = \cdot \begin{vmatrix} \hat{V}_X \\ \hat{V}_Y \\ \hat{V}_Z \end{vmatrix}$$

der Schätzwert der relativen Geschwindigkeit der SAR-Radarantenne ist, deren geschätzte Koordinaten des Phasenmittelpunkts sind:

$$\hat{P}_S = \begin{vmatrix} \hat{X}_S \\ \hat{Y}_S \\ \hat{Z}_S \end{vmatrix}$$

$\hat{v}_\perp$ die Orthogeschwindigkeit gleich ist,

$$\begin{vmatrix} - \ddot{V}_Z \\ \hat{V}_Y \\ \cdot \hat{V}_X \end{vmatrix}$$

$$\overrightarrow{RO} = \overrightarrow{\hat{P}_S} \cdot \overrightarrow{\hat{P}_M}$$

die Beobachzungsrichtung von Bodenpunkt $\hat{M}$ mit den Koordinaten

$$P_M = \begin{vmatrix} \hat{X}_M \\ \hat{Y}_M \\ \hat{Z}_M \end{vmatrix}$$

ist, wobei diese Werte in einem orthonormierten Bezugssystem T = (O,X,Y,Z) ausgedrückt werden, das im geschätzten laufenden Flugbahnpunkt bestimmt wird durch:

- O: Nullpunkt, Bodenpunkt an der geschätzten Senkrechten des Phasenmittelpunktes der SAR-Antenne;
- Z: ansteigende Senkrechte, die durch den geschätzten Standort des Phasenmittelpunktes der SAR-Antenne verläuft;
- X und Y: in der horizontalen Ebene unter dem Fluggerät, so daß die geschätzte relative Geschwindigkeit $V_s$ der Antenne in der Ebene (XOZ) enthalten und nach den positiven X-Werten gerichtet ist,

diese Werte sind in diesem Raumkreuz gleich:

$$\hat{P}_s = \begin{vmatrix} O \\ O \\ \hat{Z}_O \end{vmatrix} \qquad \hat{V}_s = \begin{vmatrix} \hat{V}_x \\ O \\ \hat{V}_z \end{vmatrix} \qquad \hat{V}_\perp = \begin{vmatrix} -\hat{V}_z \\ O \\ \hat{V}_x \end{vmatrix}$$

$$\hat{P}_M = \begin{vmatrix} \hat{X}_M \\ \hat{Y}_M \\ O \end{vmatrix} \quad \text{und} \quad \vec{R}_O = \begin{vmatrix} \hat{X}_M \\ \hat{Y}_M \\ -\hat{Z}_O \end{vmatrix}$$

FIG.1

FIG. 2

$$\widehat{P}_S = \begin{vmatrix} 0 \\ 0 \\ \widehat{Z}_0 \end{vmatrix}$$

$$\widehat{P}_M = \begin{vmatrix} \widehat{x}_M \\ \widehat{y}_M \\ 0 \end{vmatrix}$$

$\vec{\widehat{V}_S}$

$\vec{\widehat{R}_0}$

$M_0$

z

y

x

0

EP 0 586 302 B1